Europäisches Patentamt

(19) European Patent Office

Office européen des brevets

(11) Publication number: **0 292 266**
A2

## (12) EUROPEAN PATENT APPLICATION

(21) Application number: 88304507.2

(22) Date of filing: 18.05.88

(51) Int. Cl.⁴: **B 29 B 15/08**
B 29 B 15/14, B 29 C 67/14

(30) Priority: 18.05.87 JP 120622/87
03.02.88 JP 24526/88

(43) Date of publication of application:
23.11.88 Bulletin 88/47

(84) Designated Contracting States: FR GB

(71) Applicant: SUMITOMO CHEMICAL COMPANY, LIMITED
15 Kitahama 5-chome Higashi-ku
Osaka-shi Osaka 541 (JP)

(72) Inventor: Yamamoto, Kazuo
2-10-2-222 Sonehigashico
Toyonaka-shi Asaka-fu (JP)

Yamatsuta, Kohji
4-4-2 Hiyoshidai
Ootsu-shi Shiga-ken (JP)

Abe, Yasuaki
4-6-13 Sakasedai
Takarazuka-shi Hyogo-ken (JP)

(74) Representative: Geering, Keith Edwin et al
REDDIE & GROSE 16 Theobalds Road
London WC1X 8PL (GB)

(54) Spreading fibre bundle.

(57) Apparatus for manufacturing a fibre-reinforced plastics prepreg comprising, successively arranged, means (4,5,13) for drawing a continuous fibre bundle (1) from a supply (2) and keeping it under constant tension, freely rotatable roller(s) (16, 17, 18) having vibrating means for spreading the fibre bundle into fibres, fluidizing means (21) for impregnating the fibre bundle, while being so spread, with powdered resin (27), means (23) for heating the resin-impregnated fibre bundle to melt the resin, and means (24) for forming the molten resin-impregnated fibre bundle to desired shape.

Fig. 1

**Description**

## SPREADING FIBRE BUNDLE

This invention relates to a process for spreading a fibre bundle, more particularly for such spreading by the use of vibrated spreading roller(s). This invention also relates to a process and apparatus for manufacturing a fibre-reinforced plastic prepreg.

In recent years fibre-reinforced plastics (FRP), e.g. carbon FRP of excellent properties such as lightness, high strength and high modulus, have been used as advanced composite materials in the aviation, space, sport, leisure, automobile etc. fields.

Conventionally, such FRP has been manufactured by consolidating reinforcement fibres with a matrix resin to produce a half-processed material generally referred to as prepreg, and then subjecting such prepreg to heating and forming by such methods as hot-pressing, autoclaving, filament winding, etc.

As matrix resins for such prepregs there have generally been used thermosetting resins represented by epoxy resins, and in more recent years thermoplastic resins have come to attention due to their advantageous properties such as high toughness, short processing cycle, good repairability, etc.

Such prepregs have been manufactured by a process wherein a plurality of continuous fibre bundles are pulled, while being passed around a series of bars or rollers, to spread into fibres (filaments); these are then passed, while so spread, through a fluidized bed of powdered resin to impregnate the resin into the fibres, and then resin-melting and forming are conducted; this is disclosed in JP-A-78273/77, JP-A-501943/83 and JP-A-85715/84.

In another manufacturing process continuous fibre bundle is electrostatically charged to spread the fibres by mutual electro static repulsion; spread fibres are passed through an electrostatic bath of powdered resin with the opposite charge to cause electrostatic deposition of the powdered resin into the fibres, and then resin-melting and forming are conducted; this is disclosed in JP-A-8858/73. The step of spreading is important to cause more uniform impregnation of powdered resin into the fibres.

However, by the above methods, it is difficult to effect uniform and sufficient spreading, and the resin may thus not be uniformly impregnated well into the fibres, so that in the resulting prepreg voids may be formed and there may be biased or non-uniform distribution of the fibres. Another problem is that damage) so-called fuzzing phenomenon) to the fibres may occur due to friction caused by the high tension, so that the strength of the reinforcement fibres will be lowered.

We have found that, when vibration is imparted to freely rotatable roller(s) used for fibre bundle spreading, spreading can be effected more easily and uniformly even under less tension than with conventional methods; the fibre damage is small, and FRP prepregs manufactured by impregnating the spread fibres with powdered resin followed by resin-melting and forming, have little or no defects and have good impregnation of the fibres with the resin.

Thus, the present invention provides a process for spreading a continuous fibre bundle comprising passing the continuous bundle around one or two or more freely rotatable rollers under tension to continuously spread the fibre bundle into fibres, the spreading being assisted by vibrating at least one of the said rollers. It also provides a process for manufacturing a fibre-reinforced plastics prepreg which includes passing a continuous fibre bundle around one or two or more freely rotatable rollers under tension while vibrating at least one of the rollers to spread the bundle into fibres, and impregnating the spread fibres with powdered resin. It further provides apparatus for manufacturing a fibre-reinforced plastics prepreg comprising, successively arranged, means for drawing a continuous fibre bundle from a supply and keeping it under constant tension, freely rotatable roller(s) having vibrating means for spreading the fibre bundle into fibres, fluidizing means for impregnating the fibre bundle, while being so spread, with powdered resin, means for heating the resin-impregnated fibre bundle to melt the resin, and means for forming the molten resin-impregnated fibre bundle to desired shape.

The invention is illustrated by way of example, by the embodiment shown in the accompanying drawings, in which:

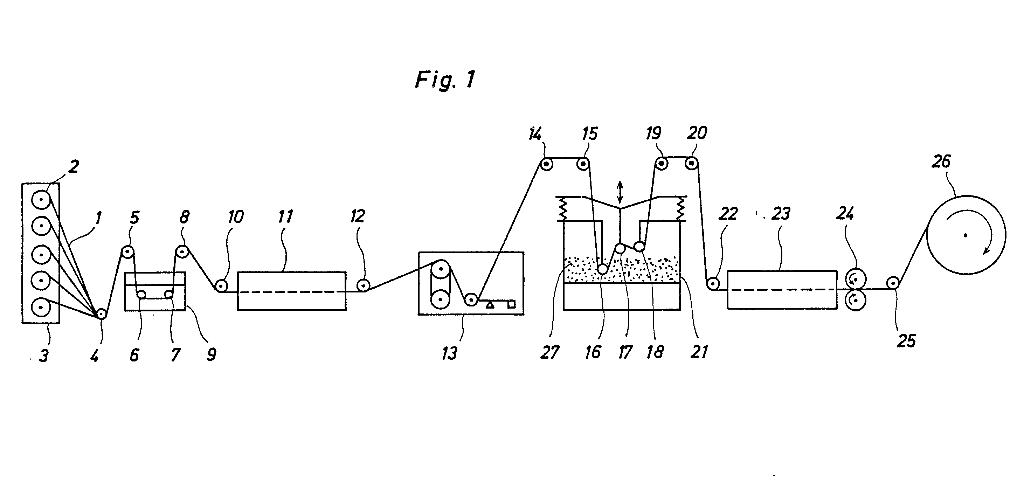

FIGURE 1 is a schematic view illustrating an example of apparatus for carrying out the process for manufacturing FRP prepreg according to the present invention.

Although Fig. 1 shows an example of apparatus for manufacturing FRP prepreg, it is also possible to utilize the same only for spreading a continuous fibre bundle.

There is provided a creel stand 3 holding at least one bobbin from which a continuous fibre bundle (sometimes referred to simply as fibres or filaments hereinafter) 1 is drawn out.

The fibres or filaments to which the present invention is applied are not limited to any particular kind, provided that they are continuous, e.g. in the form of roving or tow. Specific examples of the fibres are those used as reinforcement fibres for FRP, for example, inorganic fibre tows such as glass fibre roving, carbon fibre tow, alumina fibre tow, silicon carbide fibre tow, etc; organic fibre tows such as aramid fibre tow, aromatic polyester fibre tow, nylon fibre tow, polyethylene fibre tow, etc.; and metal fibre tows, etc.

The present invention is effective whether or not the fibres are sized but it is more advantageous to employ fibres which have not been treated with sizing agent.

The continuous fibre bundle 1 from bobbin 2 is passed via guide rollers 4 and 5 into a surface treating bath 9. Although not always necessary, it is preferred to surface treat the fibres, e.g. with a liquid such as a silane coupling agent to improve the adhesion between the fibres and matrix resin. Rollers 6 and 7 may be used to spread the continuous fibre bundle 1 so as to conduct the surface treatment more effectively. The surface treating liquid may be selected according to the particular powdered resin to be used. For example, an aqueous solution of an amino-containing silane coupling agent may be used for polyamide resin, a carbon tetrachloride solution of a chlorine-containing silane coupling agent for polyetheretherketone resin, an aqueous solution of an epoxy-containing silane coupling agent for epoxy resin.

The continuous fibres 1 from treatment bath 9 are then passed via guide rollers 8 and 9 into a furnace 11 which evaporates the solvent of the surface treating liquid and may be of any type which can increase the temperature to the solvent boiling point or higher. Examples of such furnaces are annular furnaces with nichrome or Kanthal heating wires or with silicon carbide heating elements, and infrared image furnaces etc. An infrared image furnace is preferred because of its high rate of temperature increase and ability for concentrated heating.

The dried continuous fibres 1 are passed via a guide roller 12 to a tension adjusting device 13. The tension to be applied to the fibres or fibre bundle at the time of spreading according to the invention may be determined according to the dimensions of the fibres such as a diameter, and numbers of fibres constituting the fibre bundle to be spread. It is an advantage of the invention that the tension may be considerably lower than that used in conventional methods. Thus, according to the invention, the tension per unit area of fibre is preferably 50 - 1000 $g/mm^2$, more preferably 100 -500 $g/m^2$. When the tension is less than 50 $g/mm^2$ tension control may become difficult, and when it exceeds 1000 $g/mm^2$ the friction with the opening rollers may be too large and tend to damage the fibres. Specific examples of the tension adjusting device are Nelson roller type tension controller, torque motor type tension controller, etc.; the former is preferred for easy operation.

The continuous fibre bundle 1 under the so-controlled tension is then passed via guide rollers 14, 15 and spread into fibres by means of freely rotatable rollers 16, 17 and 18. Each freely rotatable roller has a roller width larger than the roller diameter; in longitudinal cross-section of the roller the roller surface may be flat, different from usual guide rollers in which it is U- or V-shaped. It is not essential to provide three freely rotatable rollers; there may be one or more, and the number vibrated may be at least one to obtain the advantages of this invention. When there are three or more freely rotatable rollers it is preferable to impart vibration to the intermediate roller(s). The number of freely rotatable rollers, the position and number of the roller(s) vibrated, etc. may be selected in accordance with the particular object. The material for and size of the roller(s) are not critical.

The feature of the present invention is to vibrate the roller(s) as mentioned before. The frequency is not critical, but is preferably 5 - 60 Hz, more preferably 20 - 40 Hz. When the frequency is less than 5 Hz the effect may not be marked, whilst when it exceeds 60 Hz there may not be corresponding improvement in the effect. Preferred amplitude, although depending upon the frequency, is 0.1 - 5 mm, more preferably 0.3 - 2 mm. When the amplitude is too small the effect may not be marked, and when it is too large the fibres may tend to be damaged. The direction of vibration is preferably at 60 - 90 degrees, particularly about perpendicular, to the tangent of the fibres which contact the circumference of the spreading roller, but it is not critical.

The continuous fibres 1 spread as above are impregnated with a powdered resin 27 by being passed through an apparatus 21 for the fluidization of the powdered resin, wherein the powdered resin 27 is fluidized by a stream of air or neutral gas. The fluidization apparatus comprises a porous plate made of a resin such as polyethylene, a gas introduction chamber for flowing air or neutral gas through said porous plate upwardly, and a resin retaining chamber provided above the porous plate. For impregnation by the powdered resin the freely rotatable roller(s) is immersed in the fluidized bed. It is not always necessary to immerse all of the freely rotatable rollers. The advantage of the present invention can be attained by immersing at least one roller.

The amount of the powdered resin to be impregnated into the continuous fibres 1 may be adjusted by controlling the depth of immersion of at least one of freely rotatable rollers 16, 17, 18 in the fluidized bed. Thus, as the immersion depth is increased the amount of impregnation is increased and hence the fibre volume fraction is decreased. For example, it is possible to control the fibre volume fraction to be in the range of 20 - 80 % by immersing only the freely rotatable roller 16 in the fluidized bed as disclosed in Example 4 below.

The powdered resin used in the present invention is not critical provided that it is a thermoplastic or thermosetting powdered resin having a melting point higher than room temperature. Specific examples of the thermoplastic resins are general purpose resins such as polyvinyl chloride, polyethylene, polypropylene, etc., general purpose engineering plastics such as polyamide, polyacetal, polycarbonate, modified polyphenylene oxide, polyethylene terephthalate, polybutylene terephthalate, etc., and high performance engineering plastics such as polysulfon, polyethersulfon, polyphenylene sulfide, polyarylate, aromatic polyester, polyamideimide, polyetherimide, polyetherketone, etc. Specific examples of thermosetting resins are epoxy resin, bismaleimide resin, polyamide resin, etc.

In the present invention the powdered resin is employed in a fluidized state. The particle diameter of the resin is not critical, but is preferably from under 24 mesh to over 350 mesh (Japanese Industrial Standards), more preferably under 60 mesh to over 200 mesh. If the particle diameter is under 350 mesh there may occur the so-called bridging phenomenon so that uniform fluidization state can not be obtained, and when the particle diameter is over 24 mesh uniform impregnation of the resin into the continuous fibrers might not occur.

The continuous fibres 1 impregnated with the powdered resin 27 are passed via guide rollers 19, 20, 22 and to a heating furnace 23 which may be of any kind which can increase the temperature to the resin melting or softening point or higher. Examples of such heating furnaces are as for furnace 11; an infrared image furnace is again preferred.

Then the continuous fibres 1 impregnated with the molten resin are fed to a forming apparatus 24 so as to be formed into a desired form. The forming apparatus 24 comprises a pair of grooved rollers with concave and convex grooves corresponding to the desired cross-sectional shape. The material and size of said rollers are not critical. However it is preferable that each roller has a plated surface because the surface will influence the surface state of the formed prepreg. The formed FRP prepreg is passed via a guide roller 25 and wound on a winding drum 26.

Thus, according to the present invention, the spreading of a fibre bundle can be effected extremely uniformly under a slight tension and the resin impregnation is conducted in such spread state of the fibres, so that the damage on the fibres is small and there can be manufactured a FRP prepreg with good impregnation of resin into the fibres.

The FRP prepregs obtained by the present invention may be used for the reinforcement of pressure vessels,or may be cut into long fibrous pellets for use in injection molding; their industrial utility is large.

The invention will be more concretely explained by means of Examples.

## Example 1

A glass fibre roving (product of Nitto Boseki K.K. RS-110 PE-535, number of filaments: 3.5 kf) 1 was drawn from bobbin 2 and passed via a guide roller 4 into a tension adjusting device 13 (Nelson roller system), then spread into fibres by passing over and around freely rotating rollers 16, 17 and 18, and then passed through via rollers 19 and 20 and wound into a separately provided bobbin. In this case surface treatment bath 9 and heating furnace 11 were not provided. A powdered resin 27 was not present in apparatus 21.

The glass fibre roving was placed under tension of 350 g/mm$^2$ and the wind-up speed was 50 cm/min. The freely rotatable roller 17 was vibrated vertically at a frequency of 30 or 40 Hz and with an amplitude of $\pm$ 0.6 mm. The width of the spread glass fibre roving and the degree of damage of the fibres as observed by the naked eye are shown in Table 1.

## Example 2

The spreading was conducted in the same manner as in Example 1 except that carbon fiber tow (Sumika-Hercules K.K., Magnamite ® AS-4, number of filaments: 12 kf) was used as the continuous fibre bundle and the tension applied was 330 g/mm$^2$. The results are shown in Table 1.

## Example 3

The spreading was conducted in the same manner as in Example 1 except that alumina fiber tow (Sumitomo Chemical Company, Limited, SN-10-1K, number of filaments: 1 kf) was used as the continuous fibre bundle and the tension applied was 650 g/mm$^2$. The results are shown in Table 1.

## Comparative Example 1

The spreading was conducted in the same manner as in Example 1 except that the applied tension was 350 g/mm$^2$ or 2330 g/mm$^2$ and the freely rotatable roller 17 was not vibrated. The results are shown in Table 1.

## Comparative Example 2

The spreading was conducted in the same manner as in Comparative Example 1 except that carbon fibre tow (Sumika-Hercules K.K., Magnamite® AS-4, number of filaments: 12 kf) was used as the continuous fibre bundle and the tension applied was 330 g/mm$^2$ or 2220 g/mm$^2$.

## Comparative Example 3

The spreading was conducted in the same manner as in Comparative Example 1 except that alumina fibre tow (Sumitomo Chemical Company, Limited, SN-10-1K, number of filaments: 1 kf) was used as the continuous fibre bundle and the tension applied was 650 g/mm$^2$ or 4350 g/mm$^2$. The results are shown in Table 1.

Table 1

| Item No. | Tension $(g/mm^2)$ | Frequency (Hz) | Width of spread fibres (mm) | Degree of damage |
|---|---|---|---|---|
| Example 1 | 350 | 30 | 25 | ◯ |
| | 350 | 40 | 30 | ◯ |
| Example 2 | 330 | 30 | 22 | ◯ |
| | 330 | 40 | 28 | ◯ |
| Example 3 | 650 | 30 | 12 | ◯ |
| | 650 | 40 | 15 | ◯ |

Table 1 (cont'd)

| | | | | |
|---|---|---|---|---|
| Comp. Example 1 | 350 | Not vibrated | 5 | ◯ |
| | 2330 | | 7 | ✕ |
| Comp. Example 2 | 330 | | 8 | ◯ |
| | 2220 | | 10 | ✕ |
| Comp. Example 3 | 650 | | 5 | ◯ |
| | 4350 | | 6 | ✕ |

◯ Almost no damage observed.

✕ Damage observed.

Example 4

Glass fibre roving (Nippon Glass Fibre K.K., E-glass fibre roving RER 115X-FW 2485, number of filaments: 3.5 kf) 1 was drawn from bobbin 2 and passed via guide rollers 4 and 5 and subjected to surface treatment in the surface treating bath 9 while being passed via spreading rollers 6 and 7. A 2 % (by weight) aqueous solution of silane coupling agent (Nihon Unicar Co., Ltd., A-1100, γ-amino-propyltriethoxysilane) was used as the surface treating liquid. The surface treated glass fibre roving was passed via guide rollers 8 and 10 into the infrared image furnace 11 for drying. The dried roving was passed via guide roller 12 and tension adjusting device 13 (Nelson roller guide) so that the tension applied to the glass fibre roving was maintained at 350 $g/mm^2$.

Then the roving was passed via guide rollers 14 and 15 and then spread by being passed around the freely rotatable rollers 16, 17 and 18 (diameter 20 mm, width 40 mm, product of SUS). In this case the freely rotatable roller 17 was vibrated vertically at a frequency of 30 Hz and with an amplitude of $\pm$ 1.2 mm.

As thermoplastic resin there was used nylon 66 (Ube Kosan K.K., P 2020, particle diameter: under 60 mesh -over 100 mesh). The powdered resin was fluidized by means of a current of air in the fluidization apparatus 21. The freely rotatable roller 16 was immersed down to its axis in the fluidized bed.

During passage through the fluidization apparatus 21 the powdered nylon 66 was impregnated into the roving in the spread state.

The fluidization apparatus 21 (length 150 mm, width 200 mm, depth 250 mm, product of SUS) had a polyethylene porous plate (average hole diameter 10 μm, thickness 10 mm),a powdered resin chamber (depth 190 mm) provided above the porous plate, and a gas introduction chamber (depth 50 mm) provided below the porous plate for flowing gas therethrough into the resin chamber for the fluidization of the powdered resin. The powdered nylon 66 was fluidized by means of air introduced at a pressure of 3 $kg/cm^2$. The thickness (depth) of the fluidized bed was 50 mm.

The glass fibre roving impregnated with the powdered nylon 66 was passed via guide rollers 19, 20 and 22 and then through an infrared image furnace furnace 23 to melt the nylon 66. The temperature was 280°C. The glass fibre roving impregnated with the molten nylon 66 was formed into a tape of 5 mm width by passing through a forming apparatus 24 consisting of a pair of concave and convex grooved rollers (diameter 70 mm, width 150 mm, product of SUS) of 5 mm both in groove width and depth.

The formed prepreg was passed via guide roller 25 and wound on a winding drum 26. The winding speed was 1.5 m/min. The thus manufactured prepreg had a width of 5mm and thickness of 0.3 mm and the appearance was good. The degree of resin impregnation observed by a scanning electronic microscope and the degree of damage of the fibres as observed by the naked eye are shown in Table 2.

## Example 5

Prepreg was manufactured in the same manner as in Example 4 except that carbon fibre tow (Sumika-Hercules K.K., Magnamite® AS-4, number of filaments: 12 kf) was used as the continuous fibre bundle and the tension applied was 330 $g/mm^2$. The results are shown in Table 2.

## Example 6

Prepreg was manufactured in the same manner as in Example 4 except that alumina fibre tow (Sumitomo Chemical Company, Limited, SN-20-1K, number of filaments: 3 kf) was used as the continuous fibre bundle, polyetheretherketone (Imperial Chemical Industries Ltd., Victrex® 150 P-F, particle diameter: under 120 mesh - over 350 mesh) was used as the powdered resin and 0.3 % (by weight) carbon tetrachloride solution of silane coupling agent [Chisso K.K., T-2455, 1-trichlorosilyl-2(chloromethylphenyl)ethane] was used as the surface treating liquid, tension applied was 650 $g/mm^2$ and the temperature for melting the resin was 380°C. The results are shown in Table 2.

## Comparative Example 4

Prepreg was manufactured in the same manner as in Example 4 except that the tension applied was 350 $g/mm^2$ or 2330 $g/mm^2$ and the freely rotatable roller 17 was not vibrated. The results are shown in Table 2.

## Comparative Example 5

Prepreg was manufactured in the same manner as in Example 5 except that the tension applied was 330 $g/mm^2$ or 2220 $g/mm^2$ and the freely rotatable roller 17 was not vibrated. The results are shown in Table 2.

## Comparative Example 6

Prepreg was manufactured in the same manner as in Example 6 except that the tension applied was 650 $g/mm^2$ or 4350 $g/mm^2$ and the freely rotatable roller 17 was not vibrated. The results are shown in Table 2.

## Table 2

| Item No. | Tension (g/mm$^2$) | Frequency (Hz) | Degree of resin impregnation (1) | Degree of Damage (2) |
|---|---|---|---|---|
| Example 4 | 350 | 30 | ◯ | ◯ |
| Example 5 | 330 | 30 | ◯ | ◯ |
| Example 6 | 650 | 30 | ◯ | ◯ |
| Comp. Example 4 | 350 | Not vibrated | ✕ | ◯ |
| | 2330 | | △ | ✕ |
| Comp. Example 5 | 330 | | ✕ | ◯ |
| | 2220 | | △ | ✕ |
| Comp. Example 6 | 650 | | ✕ | ◯ |
| | 4350 | | △ | ✕ |

(1) Observation by scanning electronic microscope:

    ◯   Sufficiently impregnated into the interior

    △   Impregnated into the interior but biased distribution of fibres observed

    ✕   Impregnated only in the surface portion

(2) Observation by the naked eye of the continuous fibers impregnated with the resin:

    ◯   Almost no damage

    ✕   Damage observed

**0 292 266**

## Claims

1. A process for spreading a continuous fibre bundle comprising passing the continuous bundle around one or two or more freely rotatable rollers under tension to continuously spread the fibre bundle into fibres, the spreading being assisted by vibrating at least one of the said rollers.

2. A process according to claim 1, wherein the frequency of vibration of the said roller(s) is 5 - 60 Hz.

3. A process for manufacturing a fibre-reinforced plastics prepreg which includes passing a continuous fibre bundle around one or two or more freely rotatable rollers under tension while vibrating at least one of the rollers to spread the bundle into fibres, and impregnating the spread fibres with powdered resin.

4. Apparatus for manufacturing a fibre-reinforced plastics prepreg comprising, successively arranged, means for drawing a continuous fibre bundle from a supply and keeping it under constant tension, freely rotatable roller(s) having vibrating means for spreading the fibre bundle into fibres, fluidizing means for impregnating the fibre bundle, while being so spread, with powdered resin, means for heating the resin-impregnated fibre bundle to melt the resin, and means for forming the molten resin-impregnated fibre bundle to desired shape.

5. Apparatus for spreading a continuous fibre bundle comprising means for drawing a continuous fibre bundle from a supply and keeping it under constant tension, and freely rotatable roller(s) having vibrating means for spreading the fibre bundle into fibres.

Fig. 1